(19) Europäisches Patentamt
European Patent Office
Office européen des brevets

(11) **EP 1 980 608 A1**

(12) **EUROPEAN PATENT APPLICATION**

(43) Date of publication:
**15.10.2008 Bulletin 2008/42**

(51) Int Cl.:
*C10M 137/00* (2006.01)   *C23C 22/18* (2006.01)

(21) Application number: **08251295.5**

(22) Date of filing: **03.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.04.2007 US 696359**

(71) Applicant: **Afton Chemical Corporation Richmond, VA 23219 (US)**

(72) Inventors:
• **Devlin, Mark T.**
**Richmond,**
**Virginia 23233 (US)**

• **Hewette, Chip**
**Richmond,**
**Virginia 23238 (US)**
• **Guevremont, Jeffrey M**
**Richmond,**
**Virginia 23225 (US)**
• **Jao, Tze-Chi**
**Glen Allen,**
**Virginia 23060 (US)**

(74) Representative: **Cresswell, Thomas Anthony**
**J.A. KEMP & CO.**
**14 South Square**
**Gray's Inn**
**London**
**WC1R 5JJ (GB)**

(54) **Phosphate coatings for improved wear properties**

(57)     Lubricated surfaces and methods for improving wear performance of gears and bearings are described. The lubricated surfaces include a manganese phosphate film on the surfaces having a film layer density ranging from about 0.1 to about 0.5 milligrams per square centimeter. A lubricating oil containing a phosphorus anti-wear agent is used to provide lubrication of the surfaces.

*FIG. 1*

EP 1 980 608 A1

**Description**

**TECHNICAL FIELD:**

The disclosure relates to lubricated surfaces and in particular to methods for improving the lubrication of the surfaces to provide improved wear behavior and friction characteristics of the lubricated parts.

**BACKGROUND AND SUMMARY:**

Surface properties such as roughness, hardness and plasticity are critical to preventing wear and fatigue in bearings and gears. For example, to reduce pitting and micropitting on gears, surface roughness needs to be minimized. Instead of "superfinishing" a surface to improve its anti-wear and anti-fatigue properties coatings may be applied to the surfaces. Research on uncoated surfaces has revealed that the ability of lubricants to reduce friction and form films is critical to the anti-fatigue and anti-wear performance of the surfaces, particularly for rolling bodies, such as ball or roller bearings, and gears.

One lubrication principle that may be applied to rolling bodies and gears is known as elastohydrodynamic (EHD) lubrication. The EHD theory of lubrication for rolling bearings and gears is that a thin film of lubricant separates contacting surfaces thereof and that thin film affects the life of the bearings and gears. However, the roughness of the surfaces is an important consideration in EHD lubrication. Roughness is defined as the arithmetic average of the distance between the high and low points of a surface, and is sometimes referred to as the centerline average (CLA).

Extended gear fatigue pitting life is an essential performance requirement for today's automotive and industrial gear oils. Past studies have shown that both gear surface roughness and chemical and physical properties of oils have a significant influence on an oil's ability to prevent the formation of surface pits. An oil's ability to prevent pitting improves if a film thickness of the oil increases and boundary friction decreases. The effect of surface roughness on metal fatigue behavior has been studied extensively and is well understood by those skilled in the art. For example, an investigation of surface pitting is described by Li, S., Devlin, M.T., Milner, J.L., Iyer, R.N., Hoeprich, M.R., and Cameron, T.M., in an article entitled "Investigation of Pitting Mechanism in the FZG Pitting Test", SAE Paper No. 2003-01-3233 (2003). The influence of surface roughness on gear pitting is described by Jao, T-C, Devlin, M.T., Milner, J., Iyer, R. and Hoeprich, M.R., in an article entitled "Influence of Surface Roughness on Gear Pitting Behavior", GearTechnology May/June 2006 p 30-38. Development of a model to predict fatigue life is described in an article by Jao, T-C, Devlin, M.T., Baren, R.E., Milner, J., Koglin, C., Ryan, H.T., and Hoeprich, M.R., entitled "Development of a Model to Predict Fatigue Life in the FZG Micropitting Test", SAE Paper No. 2005-01-2179 (2005). It has been established that reducing surface roughness minimizes the formation of surface micropits which can grow to form surface pits. Accordingly, there continues to be a need to further improve surface characteristics of lubricated surfaces in order to extend the life of the lubricated parts particularly for gear and roller bearing applications.

In accordance with an exemplary embodiment, the disclosure provides lubricated surfaces including a manganese phosphate film having a film density ranging from about 0.1 to about 0.5 milligrams per square centimeter, and a lubricating oil providing lubrication of the surfaces, wherein the oil includes a phosphorus anti-wear agent.

In another exemplary embodiment, the disclosure provides a coated surface which contains a phosphate composition having a film density ranging from about 0.1 to about 0.5 milligrams per square centimeter and having a grain size ranging from about 6 to about 10 microns. Such a coated surface is effective for simultaneously reducing wear and improving fatigue life during lubrication thereof.

The invention further provides a device which comprises lubricated surfaces of the invention or a coated surface of the invention.

Yet another exemplary embodiment provides a method for simultaneously preventing wear and improving a fatigue life of a lubricated surface. The method includes coating the lubricated surface with a phosphate compound to provide a layer having a film density ranging from about 0.1 to about 0.5 milligrams per square centimeter. The phosphate coated surface is then lubricated with a lubricating oil containing a phosphorus anti-wear agent.

Another exemplary embodiment of the disclosure provides a method for improving wear properties of lubricated surfaces during lubrication of the surfaces. The method includes applying a phosphate film to the lubricated surfaces. The phosphate film contains phosphate particles having a grain size ranging from about 6 to about 10 microns. The surface is then lubricated with a lubricating oil comprising a phosphorus anti-wear agent.

Further provided is the use of a phosphate film and a lubricating oil to improve the wear properties of a surface.

An advantage of the embodiments of the disclosure is significantly improved wear and friction properties of lubricated surfaces coated with the phosphate compound as compared to uncoated surfaces.

**BRIEF DESCRIPTION OF THE DRAWINGS:**

Further advantages of the exemplary embodiments may become apparent by reference to the detailed description of the exemplary embodiments when considered in conjunction with the following drawings illustrating one or more non-limiting aspects thereof, wherein like reference characters designate like or similar elements throughout the several drawings as follows:

FIG. 1 is scanning electron microscope images of surfaces coated with a phosphate coating according to the disclosure;

FIG. 2 is an illustration of a typical trace of a wear scar cross-section on a lubricated surface according to the disclosure;

FIG. 3 is a correlation curve for wear and surface characteristics for lubricated surfaces according to the disclosure;

FIG. 4 is a correlation curve for boundary friction coefficients and surface characteristics for lubricated surfaces according to the disclosure;

FIG. 5 is an illustration of EHD film thicknesses for two oils on a lubricated surface according to the disclosure; and

FIG. 6 is a correlation curve for fatigue performance and surface characteristics for lubricated surfaces according to the disclosure.

**DETAILED DESCRIPTION OF THE EXEMPLARY EMBODIMENTS:**

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(1) hydrocarbon substituents, that is, aliphatic (e.g., alkyl or alkenyl), alicyclic (e.g., cycloalkyl, cycloalkenyl) and aromatic (e.g. phenyl or naphthyl) substituents, and aromatic-, aliphatic-, and alicyclic-substituted aromatic substituents, as well as cyclic substituents wherein the ring is completed through another portion of the molecule (e.g., two substituents together form an alicyclic radical). Examples of hydrocarbon substituents are aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);

(2) substituted hydrocarbon substituents, that is, substituents containing non-hydrocarbon groups which, in the context of this invention, do not alter the predominantly hydrocarbon substituent (e.g., halo (especially chloro and fluoro), hydroxy, alkoxy, mercapto, alkylmercapto, nitro, nitroso, and sulfoxy);

(3) hetero substituents, that is, substituents which, while having a predominantly hydrocarbon character, in the context of this invention, contain other than carbon in a ring or chain otherwise composed of carbon atoms. Heteroatoms include sulfur, oxygen, nitrogen, and encompass substituents as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

In one embodiment, a hydrocarbyl group comprises from 1 to 32, for example from 1 to 24, carbon atoms.

As used herein, the term "percent by weight", unless expressly stated otherwise, means the percentage the recited component represents to the weight of the entire composition.

In order to improve the wear characteristics of gears and roller bearings, lubricating oil compositions in combination with particular phosphate coatings may be used. In particular, a lubricated surface containing a phosphate coating having a particular coating layer film density and particle size may provide superior wear and friction characteristics. The phosphate coating layer film density is desirably in the range of from about 0.1 to about 0.5 milligrams per square centimeter for a phosphate particle size ranging from about 6 to about 10 microns. As the coating layer density increases above about 0.5 milligrams per square centimeter, the boundary friction coefficient has been observed to increase. The wear resistance of the surface has also been observed to increase as the particle size increases from about 6 microns to about 10 microns. Accordingly, phosphate coatings within the foregoing range and having the indicate particle size may be particularly suitable for improving the wear and friction characteristics of gears and roller bearings.

Of the phosphate coatings, manganese phosphate coatings are the most desirable from a friction and/or wear point of view. Manganese phosphate coatings may be applied to metal surfaces using well known coating techniques such as generally described in GB 812,095 and GB 1,417,369.

Another factor that may contribute to improved performance characteristics of phosphate coatings is the inclusion of certain surface active agents in lubricant compositions used to lubricate the surfaces. In particular, the lubricating oil formulation may contain an alkyl phosphate anti-wear additive in addition to other conventional lubricant additives and a base oil. A particularly suitable alkyl phosphate anti-wear agent for the lubricant formulation is amyl acid phosphate. The lubricant may contain from about 0.1 to about 1.0 wt.% of the alkyl phosphate based on the total weight of the lubricant in order to reduce wear and reduce the boundary friction coefficient of the lubricant.

Base oils suitable for use in formulating lubricant compositions according to exemplary embodiments of the disclosure may be selected from any of the synthetic or natural oils or mixtures thereof. Natural oils include animal oils and vegetable oils (e.g., castor oil, lard oil) as well as mineral lubricating oils such as liquid petroleum oils and solvent treated or acid-treated mineral lubricating oils of the paraffinic, naphthenic or mixed paraffinic-naphthenic types. Oils derived from coal or shale are also suitable. The base oil typically has a viscosity of about 2 to about 15 cSt and preferably about 2 to about 10 cSt at 100° C. Accordingly, the base oil used which may be used may be selected from any of the base oils in Groups I-V as specified in the American Petroleum Institute (API) Base Oil Interchangeability Guidelines. Such base oil groups are as follows:

| Base Oil Group[1] | Sulfur (wt.%) | | Saturates (wt.%) | Viscosity Index |
|---|---|---|---|---|
| Group I | > 0.03 | and/or | < 90 | 80 to 120 |
| Group II | ≤ 0.03 | And | ≥ 90 | 80 to 120 |
| Group II<br>Group IV | ≤ 0.03 | And | ≥ 90 | ≥ 120 |
| | all polyalphaolefins (PAOs) | | | |
| Group V | All others not included in Groups I-IV | | | |
| [1]Groups I-III are mineral oil base stocks. | | | | |

In order to evaluate the effectiveness of the phosphate coating for gear and roller bearing applications the effect of surface coatings on lubricant performance was assessed. In particular, High Frequency Reciprocating Rig (HFRR) wear and friction tests were performed on both uncoated and phosphate coated gears. The effect of phosphate coatings on fatigue life and wear was examined. In particular, the effect of the density of manganese phosphate (MnP) on surfaces and MnP grain size on fatigue and wear was determined according to the following non-limiting example.

**Example 1**

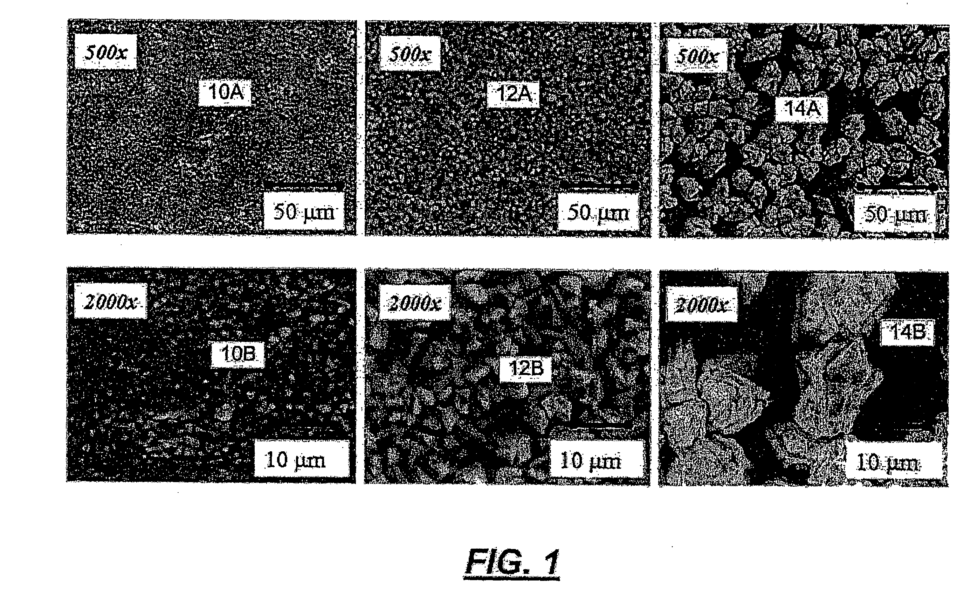

Six different phosphate coated surfaces were examined. The phosphate coated surfaces had various densities of MnP deposited on the surfaces and the sizes of the MnP grains on the surfaces were also varied. FIG. 1 is scanning electron microscope (SEM) images of several of the surfaces that were examined. In FIG. 1, images 10A and 10B are surfaces coated with MnP having a grain size of about 2.5 microns, images 12A and 12B are surfaces coated with MnP having a grain size of 4.5 microns, and images 14A and 14B are surfaces coated with MnP having a grain size of 12 microns. The steel material to which the coatings were applied was also examined. Table 1 includes a list of all of the surfaces studied as well as the surface roughness (Ra) of each surface.

Table I: Surfaces Examined

| Surface | MnP Layer density (mg/ft$^2$) (mg/cm$^2$) | Average MnP Grain Size (μm) | Surface Roughness Ra (μm) |
|---|---|---|---|
| Uncoated | 0 | 0 | 0.66 |
| 1 | 394 (0.424) | 3.5 | 0.35 |
| 2 | 445 (0.479) | 7.0 | 0.58 |
| 3 | 853 (0.918) | 2.5 | 0.41 |

(continued)

| Surface | MnP Layer density (mg/ft$^2$) (mg/cm$^2$) | Average MnP Grain Size ($\mu$m) | Surface Roughness Ra ($\mu$m) |
|---|---|---|---|
| 4 | 862 (0.928) | 4.5 | 0.51 |
| 5 | 1170 (1.26) | 9.5 | 0.61 |
| 6 | 1206 (1.30) | 12.0 | 1.63 |

Two fresh oils which met API GL-5 gear oil specifications were tested with the above coated surfaces. Oil 1 contained 0.75 wt.% alkyl phosphate anti-wear agent and 5.5 wt.% of conventional additives. Oil 2 contained 0.45 wt. % alkyl phosphate anti-wear agent and 8.0 wt.% of conventional additives. The conventional additives used in the oils were a sulfurized olefin, a polysulfide, a succinimide dispersant, an amine friction modifier, a dithiodiazole corrosion inhibitor, and an anti-foam agent. The ability of oils to form films and reduce friction is related to gear fatigue life. Therefore, oils were selected for testing based on having different film formation and friction reducing properties.

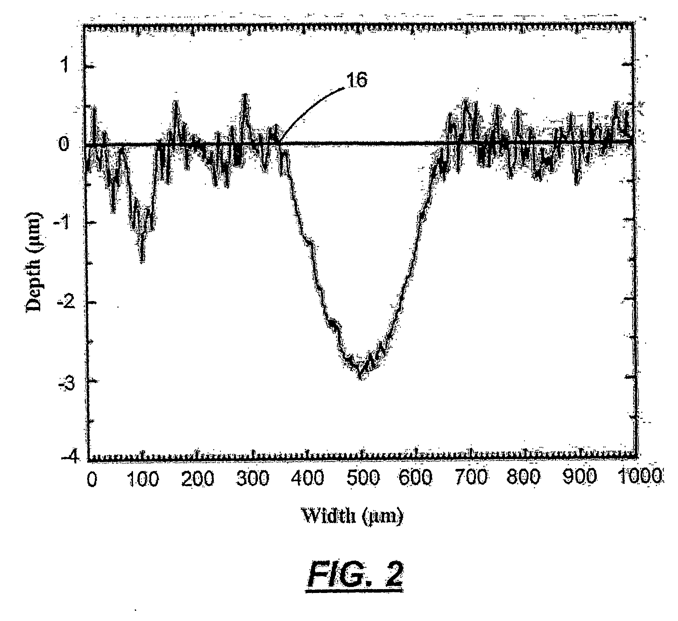

The wear tests with the oils were performed using the HFRR. In the HFRR tests, a ball was oscillated across a 1cm x 1cm piece of the surfaces described in Table I. The ball was oscillated at a speed of 20Hz over a one-millimeter path, with an applied load of 700g between the ball and the test surface. The tests were run for 60 minutes at a temperature of 120° C. During the tests, the boundary friction coefficient for each oil-surface combination was determined. After testing, a surface trace of the wear scar on the test surface was measured using the Micro Analyzer 2000 from Precision Devices Incorporated (PDI). FIG. 2 illustrates an exemplary PDI wear trace 16 produced by the foregoing wear test. The cross-sectional area of the wear trace was determined for each oil-surface combination. The EHD film thicknesses of the two oils were measured using an Optical Interferometer. Film thickness was measured at 100° C. and a speed of 1 m/sec.

The boundary friction and film thickness of the oils in combination with the surface roughness of a material was used to calculate the predicted fatigue life in FZG pitting tests. The effect of surface coatings on wear, boundary friction, and predicted fatigue life may be described using the following equation:

$$\text{Performance} = A + B * \text{density of MnP} + C * \text{grain size} + D * \text{Oil Effect} \qquad (1)$$

In equation (1), the "Oil Effect" is the difference in performance between Oil 1 and Oil 2 for the surfaces tested. The values of the constants A, B, C, and D are determined using standard statistical techniques. In addition, once the values of B and C are known the relative effect of the density of MnP and grain size on wear, boundary friction, or predicted pitting may be calculated as indicated below.

Table II shows the wear scar cross-sectional areas for HFRR tests performed on the surfaces described in Table I in combination with Oil-1 or Oil-2. Oil-1 was designed to form thicker EHD films than Oil-2, but did not reduce friction as well as Oil-2. HFRR wear tests were designed so that the formation of EHD films was minimized, so that the differences in oil performance were the result of the different surface active agents in the two fluids rather than their ability to form EHD films.

Table II: Wear on Coated Surfaces

| Surface | Wear Scar Produced from Tests with Oil-1 ($\mu$m$^2$) (a) | Wear Scar Produced from Tests with Oil-2 ($\mu$m$^2$) (a) |
|---|---|---|
| Uncoated | 7800 (1000) | 4400 (300) |
| 1 | 10600 (400) | 6300 (1300) |
| 2 | 7100 (200) | 5600 (600) |
| 3 | 14000 (600) | 6100 (200) |
| 4 | 13100 (1600) | 6800 (1700) |
| 5 | 9000 (1000) | 5300 (300) |

(continued)

| Surface | Wear Scar Produced from Tests with Oil-1 ($\mu$m$^2$) (a) | Wear Scar Produced from Tests with Oil-2 ($\mu$m$^2$) (a) |
|---|---|---|
| 6 | 10200 (2000) | 6600 (600) |
| (a) The values in parentheses are the standard deviations in the wear scar measurements | | |

As shown by Table II, Oil-2 prevented wear better than Oil-1 on all surfaces because of the differences in surface active agents in the oils. Wear resistance varied with surface morphology. Wear tests performed with Oil-1 indicated that the best surfaces to prevent wear were the uncoated surface, surface 2, and perhaps surface 5. Wear tests performed with Oil-2 indicated the best surfaces to prevent wear were the uncoated surface, surface 2 and surface 5.

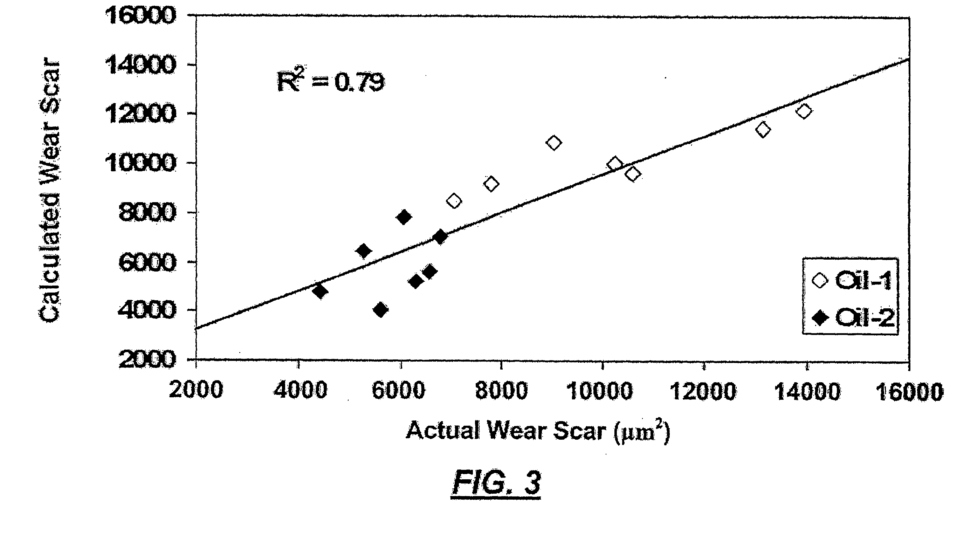

The effect of surface characteristics on wear were determined by correlating the wear data in Table II to the surface characteristics shown in Table I using Equation 1. FIG. 3 illustrates that the correlation between surface characteristics and wear data has an R-square value of 0.79. The wear data generated using Oil-1 are shown in FIG. 3 as the open diamonds and the wear data generated using Oil-2 are shown in FIG. 3 as the closed diamonds. The correlation equation relating wear to surface characteristics is as follows:

$$\text{Wear Scar} = 4800 + 4.7*\text{density of MnP} - 405*\text{grain size} + 4390*\text{Oil 1 vs Oil 2} \qquad (2)$$

Equation (2) indicates that, on average Oil-1, produces larger wear scars than Oil-2 which is evident in Table II. The equation (2) also shows that as the density of MnP on the surface increases, wear increases, but as grain size increases wear decreases. The relative effect of density of MnP and grain size on wear may be determined using Equation (2). In Table I the film layer density of MnP on the surface varied from 0 to 1206 mg/ft$^2$ and average grain size varied from 0 to 12 $\mu$m. Thus, the greatest effect that the density of MnP has on wear is 1206*4.7 or +5670$\mu$m$^2$. The greatest effect that grain size has on wear was -405* 12 or - 4860$\mu$m$^2$. The absolute effect of the density of MnP on wear is slightly greater than the absolute effect of grain size on wear.

Table III shows the boundary friction coefficients measured during the HFRR tests performed on the surfaces described in Table I in combination with Oil-1 and Oil-2.

Table III: Boundary Friction Coefficients Measured on Coated Surfaces

| Surface | Boundary Friction Coefficient from Tests with Oil -1 (a) | Boundary Friction Coefficient from Tests with Oil-2(a) |
|---|---|---|
| Uncoated | 0.109 (0.001) | 0.083 (0.001) |
| 1 | 0.113 (0.003) | 0.089 (0.001) |
| 2 | 0.109 (0.001) | 0.092 (0.001) |
| 3 | 0.116 (0.001) | 0.106 (0.007) |
| 4 | 0.112 (0.004) | 0.098 (0.007) |
| 5 | 0.111 (0.002) | 0.106 (0.001) |
| 6 | 0.112 (0.002) | 0.086 (0.005) |
| (a) The values in parentheses are the standard deviations in the friction coefficients | | |

In Table III, Oil-1 was designed to form thicker EHD films than Oil-2, but did not reduce friction as well as Oil-2. In addition, friction varied with surface morphology. Boundary friction coefficients measured when performing tests with Oil-1 were lowest on the uncoated surface and surface 2. Boundary friction coefficients measured when performing tests with Oil-2 were lowest on the uncoated surface and surfaces 1 and 6.

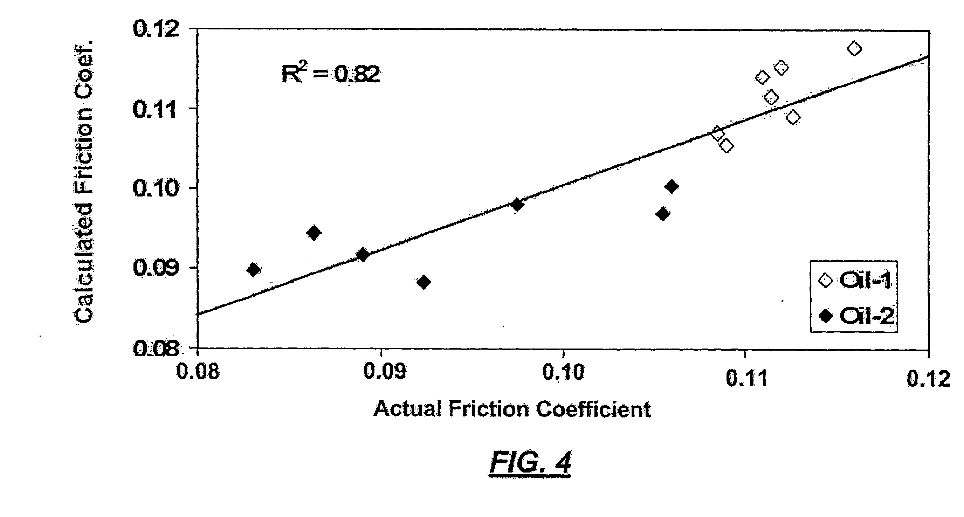

The effect of surface characteristics on friction were determined by correlating the friction data in Table III to the surface characteristics shown in Table I using Equation (1). FIG. 4 shows that the correlation has an R-square value of 0.82. The friction coefficients measured using Oil-1 are shown as the open diamonds in FIG. 4 and the friction coefficients measured using Oil-2 are shown as the closed diamonds in FIG. 4. The correlation equation relating friction coefficients to surface characteristics is as follows:

$$\text{Boundary Fr. Cf.} = 0.090 + 0.00002*\text{density of MnP} - 0.0012*\text{grain size} + 0.017*\text{Oil 1 vs Oil 2} \quad (3)$$

Equation (3) indicates that, on average, Oil-1 produces higher friction coefficients than Oil-2 which was evident in Table III. The equation also shows that as the density of MnP on the surface increases, friction increases, but as grain size increases friction decreases. The relative effect of the density of MnP and grain size on friction may be determined by using Equation (3) in the same manner as the effect of these surface parameters on wear was determined. The greatest effect that the density of MnP has on friction is 1206*0.00002 or +0.024. The greatest effect that grain size has on friction is -0.0012* 12 or 0.014. The absolute effect of the density of MnP on friction is greater than the absolute effect of grain size on friction.

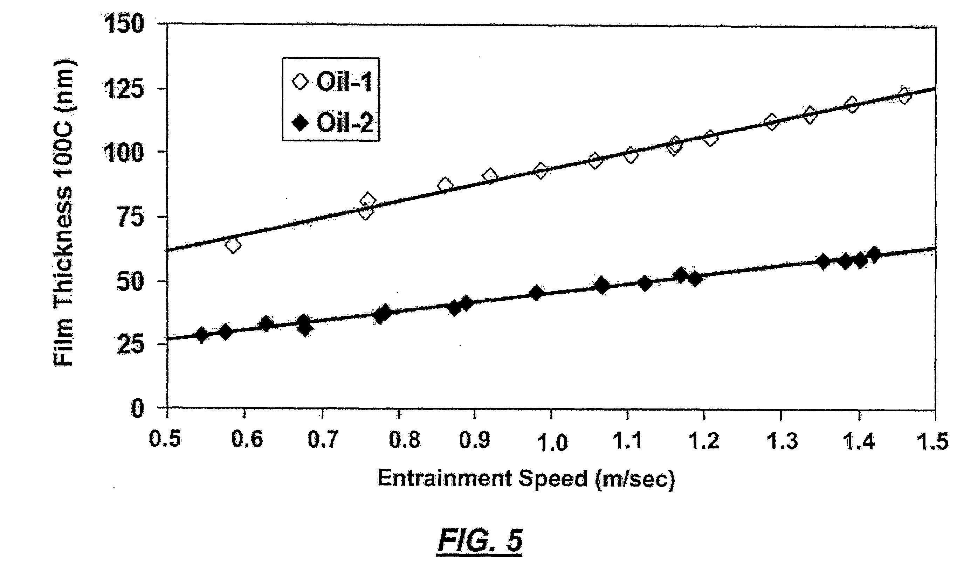

The film formation and boundary friction reducing properties of oils were correlated to fatigue life measured in FZG pitting tests. The thicker the film formed by a lubricant and the lower the boundary friction the longer the hours to pitting in FZG tests. FIG. 5 shows that Oil-1 formed thicker EHD films at 100°C. than did Oil-2. However, Table III shows that Oil-2 reduced boundary friction better than Oil-1 on the various coated surfaces. In addition, the roughness of gear surfaces affected the hours to pitting in FZG tests with smoother surfaces having longer fatigue lives.

In order to assess the effect of surface coatings on fatigue life, predicted hours to pitting in FZG tests were calculated for each oil on each surface using the film thickness data shown in FIG. 5, the boundary frictional data shown in Table III, and the surface roughness data shown in Table I. The results of these calculations are shown in Table IV.

Table IV : Predicted Hours to Pitting Calculated for Each Oil/Surface Combination

| Surface | Predicted Hours to Pitting from Tests with Oil-1 | Predicted Hours to Pitting from Tests with Oil-2 |
|---|---|---|
| Uncoated | 306 | 263 |
| 1 | 299 | 234 |
| 2 | 306 | 244 |
| 3 | 292 | 216 |
| 4 | 300 | 234 |
| 5 | 302 | 217 |
| 6 | 300 | 255 |

The predicted fatigue life for Oil-1 on all surfaces is greater than for Oil-2 on all surfaces. In addition, the predicted fatigue life for Oil-1 does not vary significantly as the surfaces are varied. That is the predicted hours to pitting for Oil-1 ranges from 292 hours on surface 3 to 306 hours on the uncoated surface and on surface 2. On the other hand, the predicted hours to pitting determined for Oil-2 on the various surfaces ranges from 216 hours on surface 3 to 263 hours on the uncoated surface. Accordingly, fatigue life may be good when Oil-1 is tested with any surface but fluctuates significantly when Oil-2 is tested on the same surfaces.

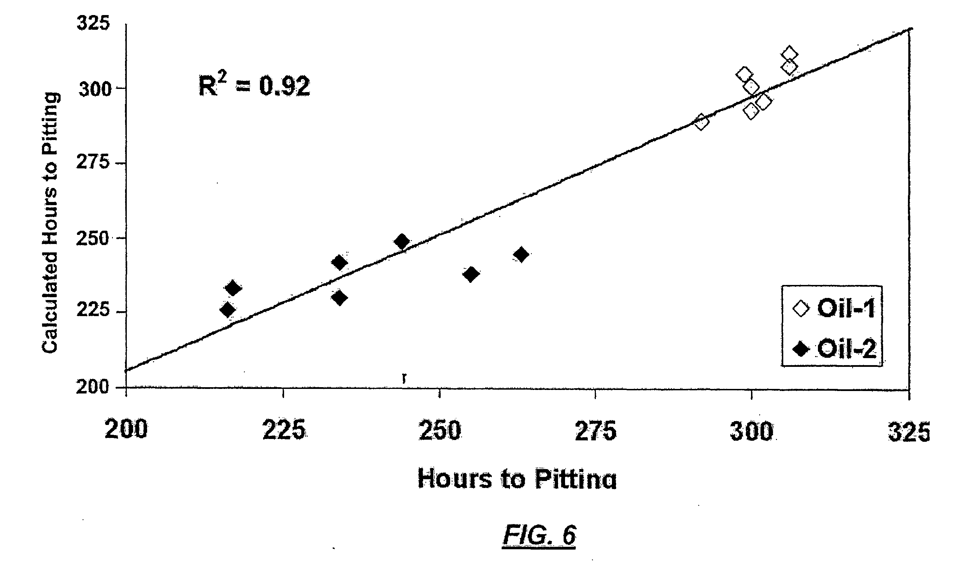

The effect of specific surface characteristics on predicted fatigue life was determined by correlating the data in Table IV to the surface characteristics shown in Table I using Equation (1). FIG. 6 shows that the correlation has an R-square value of 0.92. The fatigue lives calculated for Oil-1 are shown as the open diamonds in FIG. 6 and those calculated for Oil-2 are shown as the closed diamonds in FIG. 6. The correlation equation relating fatigue life to surface characteristics is as follows:

$$\text{Predicted Hours to Pitting} = 245 - 0.030*\text{density of MnP} + 2.38*\text{grain size} + 63*\text{Oil 1 vs Oil 2} \quad (4)$$

Equation (4) indicates that Oil-1 may protect surfaces from pitting better than Oil-2 which is evident in Table IV. The equation also shows that as the density of MnP on the surface increases hours to pitting decreases, but as the grain size increases hours to pitting increases. The relative effect of density of MnP and grain size on wear may be determined by using Equation (4). In Table I the density of MnP on the surface varied from 0 to 1206 and average grain size varied from 0 to 12. The greatest effect that the density of MnP has on predicted hours to pitting is 1206*-0.030 or -36 hours. The greatest effect that grain size has on wear is +2.38* 12 or +29 hours. The absolute effect of the density of MnP on fatigue life is slightly greater than the effect of grain size on fatigue life.

A comparison of several of the foregoing surfaces and results obtained therefrom are combined in the following table for ease of comparison.

Table V Results of the wear and friction tests performed on various phosphate coated surfaces.

| Surface | MnP layer density (mg/ft$^2$) (mg/cm$^2$) | Size of manganese phosphate grains (microns) | Wear Scar Cross-sectional area (microns$^2$) | Boundary Friction Coefficient |
|---------|-------------------------------------------|----------------------------------------------|----------------------------------------------|-------------------------------|
| 1 | 394 | 3.5 | 6300 | 0.089 |
| 2 | 445 | 7.0 | 5600 | 0.092 |
| 3 | 853 | 2.5 | 6100 | 0.106 |
| 5 | 1170 | 9.5 | 5300 | 0.106 |

Surfaces 1 and 2 contain similar phosphate layer densities but with different sized phosphate grains. Surface 2 which had larger grains on the surface was more resistant to wear as evidenced by the lower wear scar cross-sectional area. Surface 3 had a higher phosphate coating density on the surface than Surface 1 but a comparable grain size to Surface 1. As compared to Surface 1, friction was higher on Surface 3 while wear was comparable to the wear of Surface 1. As indicated above, as the layer density of manganese phosphate on the surface increased, friction increased. Surface 4 shows that wear may be reduced by increasing the MnP grain size to 9.5 microns, but the friction coefficient was relatively high for Surface 4 since the density of manganese phosphate coating on the surface was higher.

Extending gear fatigue pitting life and preventing wear are essential performance requirements for today's automotive and industrial gear oils. Surface properties such as roughness, hardness and plasticity are critical to protecting gear surfaces. For example, to reduce pitting and micropitting on gears, surface roughness should be minimized. However, instead of "superfinishing" a surface to improve its anti-fatigue and anti-wear properties coatings may be applied to surfaces. In particular phosphate coatings, as described above, may be applied to surfaces to prevent corrosion and wear during the initial operation of a machined part (break-in). The characteristics of phosphate coatings may vary with processing conditions used to apply the coatings. In one embodiment, the coated surface comprises a gear surface. In a further embodiment, the lubricated surfaces comprise gear surfaces.

As indicated by the example above, wear on phosphate-coated surfaces may be reduced by decreasing the density of phosphate on the surface or by increasing phosphate grain size as indicated by Equation (2). Likewise, the correct choice of surface active agents may be used in combination with the phosphate coating to prevent wear (compare results for Oil 1 and Oil 2 in Table II). As indicated in the example above, the anti-wear performance of the lubricant may vary as the characteristics of the phosphate coating vary (see Table II).

Past studies have shown that an oil's ability to prevent pitting improves if oil film thickness increases and boundary friction decreases. However, Table III and Equation (3) indicates that boundary friction coefficients varied as the surface morphology of phosphate coated surfaces varied. In particular, friction coefficients increased as the density of phosphate on the surface increased and friction coefficients decreased as phosphate grain size increased. The effects of surface morphology on friction along with the variation in surface roughness for coated surfaces (see Table I) may affect the fatigue life of oil/surface combinations (see Table IV and Equation 4). In particular for Oil-2, which forms thin EHD films, predicted fatigue life decreases as the density of phosphate on the surface increases and increases as phosphate grain size increases. For Oil-1, which forms the thicker EHD film, surface morphology has very little effect on predicted fatigue life. Therefore, in order to optimize fatigue life on phosphate coated surfaces oils formulated to form thick EHD films should perform better than oils formulated to control friction.

Overall, Table II and Table IV show that lubricants prevent wear and improve fatigue life best when uncoated surfaces are used. However, phosphate coated surfaces are needed to prevent corrosion and prevent wear during break-in conditions. Therefore, until new cost-effective coatings or surface finishing techniques are developed, lubricants need to be developed that prevent wear and improve fatigue life on phosphate coated surfaces. To optimize the ability of lubricants to protect surfaces the characteristics of the phosphate coating need to be well controlled. Equations 2, 3 and 4 indicate that an optimized phosphate coating contains relatively large phosphate grains and a minimal density of phosphate on the coated surface.

At numerous places throughout this specification, reference has been made to a number of U.S. Patents. All such cited documents are expressly incorporated in full into this disclosure as if fully set forth herein.

As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Other embodiments of the present disclosure will be apparent to those skilled in the art from consideration of the specification and practice of the embodiments disclosed herein. Accordingly, the embodiments are not intended to be limited to the specific exemplifications set forth hereinabove. Rather, the foregoing embodiments are within the spirit and scope of the appended claims, including the equivalents thereof available as a matter of law.

The patentees do not intend to dedicate any disclosed embodiments to the public, and to the extent any disclosed modifications or alterations may not literally fall within the scope of the claims, they are considered to be part hereof under the doctrine of

**Claims**

1.  Lubricated surfaces comprising:

    a manganese phosphate film on the lubricated surfaces having a film density ranging from about 0.1 to about 0.5 milligrams per square centimeter, and
    a lubricating oil providing lubrication of the surfaces, wherein the oil comprises a phosphorus anti-wear agent.

2.  The lubricated surfaces according to claim 1, wherein the lubricated surfaces comprise surfaces of gears.

3.  A coated surface comprising a phosphate composition having a film density ranging from about 0.1 to about 0.5 milligrams per square centimeter and having a grain size ranging from about 6 to about 10 microns.

4.  A coated surface according to claim 3 effective for simultaneously reducing wear and improving fatigue life during lubrication thereof compared to an uncoated surface.

5.  A coated surface according to claim 3 or claim 4, wherein the phosphate comprises manganese phosphate.

6.  A coated surface according to any of claims 3 to 5 wherein on the surface is a lubricant comprising a phosphorus anti-wear agent.

7.  The lubricated surfaces of any one of claims 1 or claim 2 or a coated surface according to claim 6, wherein the phosphorus anti-wear agent comprises an alkyl phosphate compound.

8.  A device which comprises lubricated surfaces according to any one of claims 1, 2, or 7 or a coated surface according to any one of claims 3 to 7.

9.  A method for simultaneously preventing wear and improving a fatigue life of a lubricated surface, comprising:

    coating the lubricated surface with a phosphate compound having a film density ranging from about 0.1 to about 0.5 milligrams per square centimeter, and
    lubricating the phosphate coated surface with a lubricating oil comprising a phosphorus anti-wear agent.

10. A method according to claim 9, wherein the phosphate compound comprises manganese phosphate.

11. A method according to claim 9 or claim 10, wherein the manganese phosphate comprises phosphate particles having a grain size ranging from about 6 to about 10 microns.

12. A method for improving wear properties of lubricated surfaces during lubrication of the surfaces comprising:

    applying a phosphate film to the lubricated surfaces, wherein the phosphate film contains phosphate particles having a grain size ranging from about 6 to about 10 microns; and
lubricating the surfaces with a lubricating oil comprising a phosphorus anti-wear agent.

13. A method according to claim 12, wherein the phosphate film has a film density ranging from about 0.1 to about 0.5 milligrams per square centimeter and/or wherein the phosphate film comprises a manganese phosphate compound.

14. Use of a phosphate film and a lubricating oil comprising a phosphorus anti-wear agent to improve the wear properties of a surface.

15. Use according to claim 14 wherein the phosphate film is as defined in any one of claims 1, 12 or 13 and/or the lubricating oil is as defined in claim 7 and/or wherein the surface is a gear surface.

*FIG. 1*

**_FIG. 2_**

EP 1 980 608 A1

_FIG. 3_

EP 1 980 608 A1

*FIG. 4*

EP 1 980 608 A1

*FIG. 5*

EP 1 980 608 A1

*FIG. 6*

**European Patent Office**

## EUROPEAN SEARCH REPORT

Application Number

EP 08 25 1295

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/240998 A1 (SULLIVAN WILLIAM [US] ET AL) 26 October 2006 (2006-10-26) <br> * paragraph [0052] - paragraph [0054] * <br> * claims; examples * <br> * paragraph [0003] - paragraph [0006] * <br> ----- | 1-3,8-15 | INV. <br> C10M137/00 <br> C23C22/18 |
| X | US 2003/000418 A1 (BOULOS MERVET S [US]) 2 January 2003 (2003-01-02) | 3-7 | |
| Y | * paragraph [0002] - paragraph [0003] * <br> * paragraph [0016] - paragraph [0018] * <br> * paragraph [0041] - paragraph [0044] * <br> * claims 1-12,16,17; example 1 * <br> ----- | 1-3,8-15 | |
| A | GB 2 330 627 A (DAIDO METAL CO [JP]) 28 April 1999 (1999-04-28) <br> * the whole document * <br> ----- | 1-15 | |
| A | EP 1 705 265 A (SUMITOMO METAL IND [JP]) 27 September 2006 (2006-09-27) <br> * the whole document * <br> ----- | 1-15 | |

|  |
|---|
| TECHNICAL FIELDS SEARCHED (IPC) |
| C10M <br> C23C |

The present search report has been drawn up for all claims

| Place of search | Date of completion of the search | Examiner |
|---|---|---|
| Munich | 9 July 2008 | Elflein, Eleonore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 1295

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2008

| Patent document cited in search report | | Publication date | Patent family member(s) | | Publication date |
|---|---|---|---|---|---|
| US 2006240998 | A1 | 26-10-2006 | NONE | | |
| US 2003000418 | A1 | 02-01-2003 | NONE | | |
| GB 2330627 | A | 28-04-1999 | US | 6012850 A | 11-01-2000 |
| EP 1705265 | A | 27-09-2006 | BR | PI0417176 A | 06-03-2007 |
| | | | CA | 2546271 A1 | 16-06-2005 |
| | | | CN | 1890403 A | 03-01-2007 |
| | | | WO | 2005054541 A1 | 16-06-2005 |
| | | | US | 2007056656 A1 | 15-03-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 812095 A

- GB 1417369 A

### Non-patent literature cited in the description

- **LI, S ; DEVLIN, M.T ; MILNER, J.L ; IYER, R.N ; HOEPRICH, M.R ; CAMERON, T.M.** Investigation of Pitting Mechanism in the FZG Pitting Test. *SAE Paper No. 2003-01-3233,* 2003
- **JAO, T-C ; DEVLIN, M.T ; MILNER, J ; IYER, R ; HOEPRICH, M.R.** Influence of Surface Roughness on Gear Pitting Behavior. *GearTechnology,* May 2006, 30-38

- **JAO, T-C ; DEVLIN, M.T ; BAREN, R. ; MILNER, J ; KOGLIN, C ; RYAN, H.T ; HOEPRICH, M.R.** Development of a Model to Predict Fatigue Life in the FZG Micropitting Test. *SAE Paper No. 2005-01-2179,* 2005